# EUROPEAN PATENT APPLICATION

(11) **EP 2 099 208 A1**
(43) Date of publication of application: **09.09.2009**
(21) Application number: 09154376.9
(22) Date of filing: 05.03.2009
(51) Int. Cl.: H04M 3/42

(54) **Method for sending related information of color ring back tone and system and device thereof**

(30) Priority: 05.03.2008 CN 200810065488; 06.02.2009 WO PCT/CN2009/070372
(71) Applicant: Huawei Technologies Co., Ltd., Longgang District Shenzhen Guangdong 518129 (CN)
(72) Inventor: Huang, Hui, 518129, Shenzhen Guangdong (CN)
(74) Representative: Gulde Hengelhaupt Ziebig & Schneider

(57) **Abstract**

A method, a system and a device for sending related information of a color ring back tone are provided. The method for sending related information of a color ring back tone includes the steps: receiving a request for obtaining the related information of the color ring back tone in the process of playing the color ring back tone, the request for obtaining the related information being sent by the receiver of the color ring back tone; and sending the related information of the color ring back tone according to the request for obtaining the related information of the color ring back tone. With the above steps, a terminal can obtain the related information of the color ring back tone being played, thereby bringing good experience to users.

## Description

This application claims the priorities to Chinese patent application No. 200810065488.0 filed on March 5, 2008 and PCT application No. PCT/CN2009/070372 filed on February 6, 2009, contents of which are hereby incorporated in their entireties.

### Field of the Invention

The present application relates to the sending of related information of color ring back tone, and particularly a method, a system and a device for sending related information of color ring back tone that is being played to a calling mobile terminal in a communication network.

### Background of the Invention

The color ring back tone is also called customized or personalized ring back tone. The color ring back tone technique employs a music or voice customized by a calling mobile terminal, a called mobile terminal or an enterprise user to replace the traditional ring back tone "du ... du", so that the calling mobile terminal can listen to colorful ring back tone before the called mobile terminal answers the call.

At present, generally, the called mobile terminal applies for and selects a color ring back tone, the calling mobile terminal is not aware of related information of the color ring back tone, i.e. the calling mobile terminal may listen to the color ring back tone transferred from the called mobile terminal when calling the called mobile terminal. It is possible that the calling user is interested in the related information of the color ring back tone, e.g. the calling user wants to know the singer of the color ring back tone and the price of the color ring back tone. The existing color ring back tone system can not fulfill this requirement of the calling user.

### Summary of the Invention

Embodiments of the present invention provide a method, a system and a device for sending related information of a color ring back tone, so that the terminal user can obtain the related information of the color ring back tone being played.

An embodiment of the present invention provides a method for sending related information of a color ring back tone, including:

receiving a request for obtaining the related information of the color ring back tone in the process of playing the color ring back tone, the request for obtaining the related information being sent by the receiver of the color ring back tone; and

sending the related information of the color ring back tone according to the request for obtaining the related information of the color ring back tone.

An embodiment of the present invention provides a system for sending related information of a color ring back tone, including:

a color ring back tone playing unit, adapted to play the color ring back tone according to a request for playing the color ring back tone; and

a device for sending the related information of the color ring back tone, adapted to receive a request for obtaining the related information of the color ring back tone in the process of playing the color ring back tone, and to send the related information of the color ring back tone according to the request for obtaining the related information of the color ring back tone.

Another embodiment of the present invention provides a device for sending related information of a color ring back tone, including:

a second receiving module, adapted to receive a request for obtaining the related information of the color ring back tone in the process of playing the color ring back tone; and

a second sending module, adapted to send the related information of the color ring back tone according to the request for obtaining the related information of the color ring back tone.

In the technical solution of the present invention, the terminal can obtain the related information of the color ring back tone being played, which brings good experience to users.

### Brief Description of the Drawings

Figure 1 is a flowchart of a method for sending related information of a color ring back tone according to an embodiment of the present invention;

Figure 2 is a flowchart of a method for sending related information of a color ring back tone according to an embodiment of the present invention;

Figure 3 is a flowchart of a method for sending related information of a color ring back tone according to an embodiment of the present invention;

Figure 4 is a flowchart of a method for sending related information of a color ring back tone according to an embodiment of the present invention;

Figure 5 is a flowchart of a method for sending related information of a color ring back tone according to an embodiment of the present invention;

Figure 6 is a flowchart of a system for sending related information of a color ring back tone according to an embodiment of the present invention;

Figure 7 is a flowchart of a device for sending related information of a color ring back tone according to an embodiment of the present invention;

Figure 8 is a flowchart of a device for sending related information of a color ring back tone according to another embodiment of the present invention; and

Figure 9 is a flowchart of a system for sending related information of a color ring back tone according to another embodiment of the present invention.

### Detailed Description of the Invention

Embodiments of the present invention provide a method, a system and a device, for sending related information of a color ring back tone being listened to by a terminal user to the terminal user, so as to fulfill requirements of the terminal user on the related information of the color ring back tone, thereby improving the user's experience.

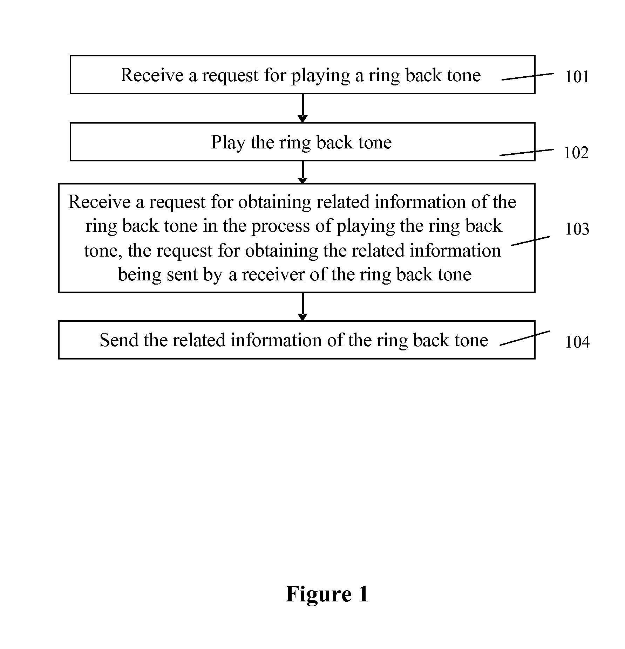

An embodiment of the present invention provides a method for sending related information of a color ring back tone. Referring to Figure 1, the method includes the following steps:

101: Receive a request for playing the color ring back tone;

102: Play the color ring back tone;

103: Receive a request for obtaining the related information of the color ring back tone in the process of playing the color ring back tone, the request for obtaining the related information being sent by the receiver of the color ring back tone; and

104: Send the related information of the color ring back tone.

With the method for sending related information of a color ring back tone, a terminal user can obtain the related information of the color ring back tone being played, thereby improving the user's experience.

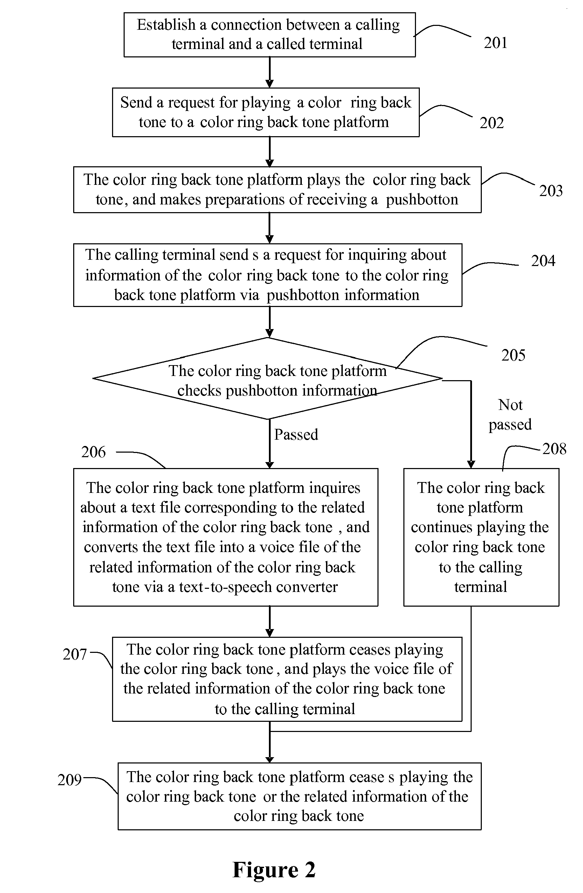

Another embodiment of the present invention provides a method for sending related information of a color ring back tone. Referring to Figure 2, the method includes the following steps:

201: Establish a connection between a calling terminal and a called terminal via an originating switch and a terminating switch in turn.

202: Send a request for playing the color ring back tone to a color ring back tone platform, where the subject of the request may be the originating switch or the terminating switch.

203: The color ring back tone platform plays the color ring back tone to the calling terminal, and makes preparations of receiving a pushbutton from the calling terminal.

204: In the process of the color ring back tone platform playing the color ring back tone to the calling terminal, if the calling terminal is interested in the color ring back tone being played and wants to know the related information of the color ring back tone such as the singer of the color ring back tone, the song name of the color ring back tone and the price of the color ring back tone, the calling terminal may send a request for inquiring about the related information of the color ring back tone to the color ring back tone platform via pushbutton information, i.e. the calling terminal presses a particular pushbutton or composite pushbuttons such as the key "*" and the keys "1*", to send the request for inquiring about the related information of the color ring back tone to the color ring back tone platform. In this manner, a forward voice channel and a backward voice channel between the calling terminal and the called terminal should be maintained as valid, i.e. the calling terminal in the backward voice channel can listen to the color ring back tone and the color ring back tone platform in the forward voice channel can receive the pushbutton request from the calling terminal.

A number is generally transferred between a telephone working in Dual Tone Multi Frequency (DTMF) and a switch via user signaling in DTMF format. In the DTMF, a group of high frequencies and a group of low frequencies are presented. The high and low frequencies each include four frequencies. A high frequency signal and a low frequency signal are combined to form a combination signal which represents a number. Referring to Table 1, a DTMF keypad is laid out in a 4×4 matrix, with each row representing a low frequency, and each column representing a high frequency. Pressing a single key (such as '1') will send a sinusoidal tone of the two frequencies (697 and 1209 hertz (Hz)). The original keypads had levers inside, so each button activated two contacts. The multiple tones are the reason for calling the system multi-frequency. These tones are then decoded by the switching center to determine which key was pressed. DTMF keypad frequencies are illustrated in the following table 1:

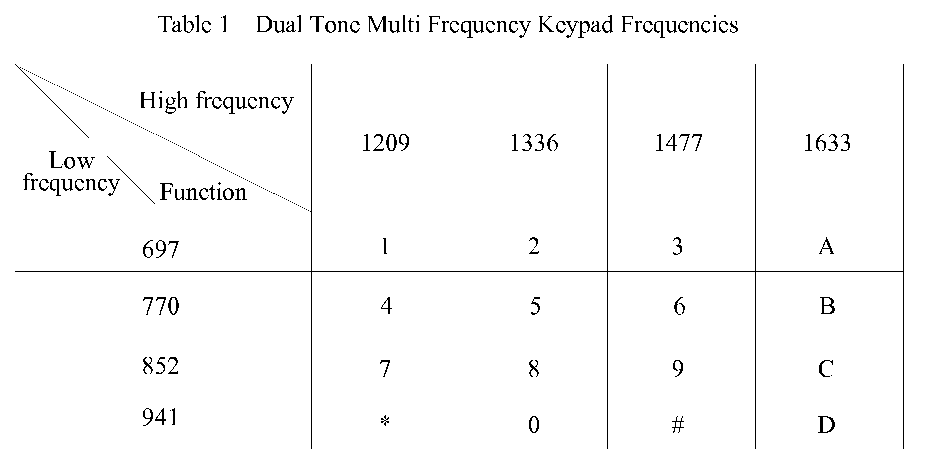

The calling terminal presses keys representing the above number, so as to send a signal including multiple frequencies, thus the called terminal can be identified. The DTMF technique is widely used in interactive control such as caller number display, voice portal, voice mail and telephone bank.

205: After receiving the request for inquiring about the related information of the color ring back tone, the color ring back tone platform checks a particular pushbutton/composite pushbuttons made by the calling terminal. If the color ring back tone platform determines that the particular pushbutton/composite pushbuttons made by the calling terminal are identical to a preset pushbutton/composite pushbuttons, it indicates that the pushbutton/composite pushbuttons pass the checking and the process goes to step 206; otherwise, the process goes to step 208. For the checking of the composite pushbuttons, a maximum time interval of respective adjacent pushbuttons in the composite pushbuttons and the maximum number of pushbuttons in the composite pushbuttons need to be set. If the time interval of pushbuttons and the number of pushbuttons of a pushbutton number exceed the maximum time interval and the maximum number of pushbuttons respectively, the exceedance of the pushbutton number will be included in a next number to be checked.

206: The color ring back tone platform inquires about a text file corresponding to the related information of the color ring back tone in a color ring back tone database according to the No. of the color ring back tone, and converts the text file corresponding to the related information of the color ring back tone into a voice file of the related information of the color ring back tone via a text-to-speech converter.

207: The color ring back tone platform ceases playing the color ring back tone to the calling terminal, and plays the voice file of the related information of the color ring back tone to the calling terminal, then the process goes to step 209.

208: For pushbuttons which do not pass the checking, the color ring back tone platform continues playing the color ring back tone to the calling terminal.

209: The color ring back tone platform does not cease playing the voice file of the related information of the color ring back tone or the color ring back tone till the called terminal answers a call or the calling terminal and/or the called terminal hangs up.

The originating switch and the terminating switch in this embodiment may be the same switch; or, a transit switch may be introduced between the originating switch and the terminating switch. In the latter case, the process of sending and receiving the information of color ring back tone is the same as that of this embodiment.

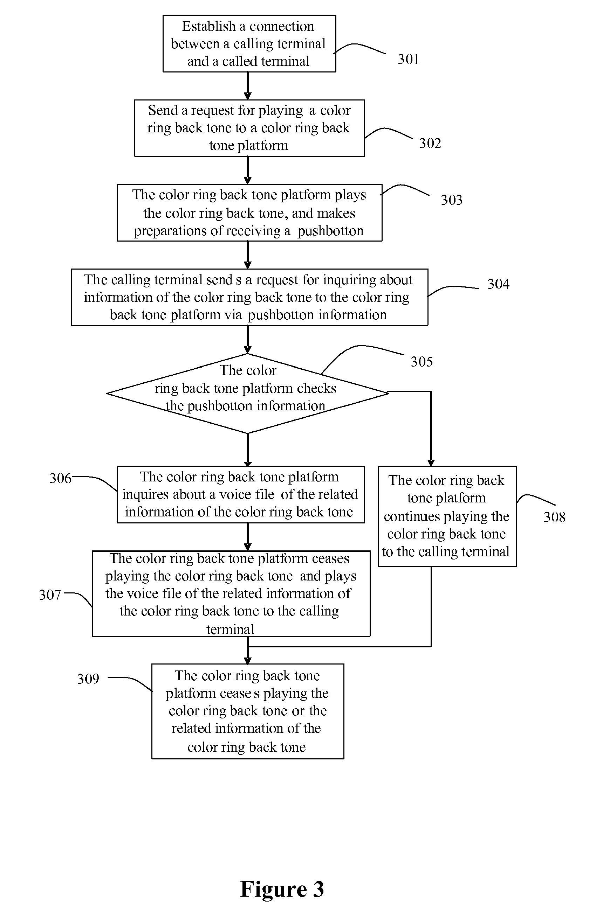

Another embodiment of the present invention provides a method for sending related information of a color ring back tone. Referring to Figure 3, the method includes the following steps:

301: Establish a connection between a calling terminal and a called terminal via an originating switch and a terminating switch in turn.

302: Send a request for playing the color ring back tone to a color ring back tone platform, where the subject of the request may be the originating switch or the terminating switch.

303: The color ring back tone platform plays the color ring back tone to the calling terminal, and makes preparations of receiving a pushbutton from the calling terminal.

304: In the process of the color ring back tone platform playing the color ring back tone to the calling terminal, if the calling terminal is interested in the color ring back tone being played and wants to know the related information of the color ring back tone such as the singer of the color ring back tone, the song name of the color ring back tone and the price of the color ring back tone, the calling terminal may send a request for inquiring about the related information of the color ring back tone to the color ring back tone platform via pushbutton information, i.e. the calling terminal presses a particular key or composite keys such as the key "*" and the keys "1*", to send the request for inquiring about the related information of the color ring back tone to the color ring back tone platform. In this manner, a forward voice channel and a backward voice channel between the calling terminal and the called terminal should be maintained as valid, i.e. the calling terminal in the backward voice channel can listen to the color ring back tone and the color ring back tone platform in the forward voice channel can receive the pushbutton request from the calling terminal.

305: After receiving the request for inquiring about the related information of the color ring back tone, the color ring back tone platform checks a particular pushbutton/composite pushbuttons made by the calling terminal. If the color ring back tone platform determines that the particular pushbutton/composite pushbuttons made by the calling terminal are identical to a preset pushbutton/composite pushbuttons, it indicates that the pushbutton/composite pushbuttons pass the checking and the process goes to step 306; otherwise, the process goes to step 308. For the checking of the composite pushbuttons, a maximum time interval of respective adjacent pushbuttons in the composite pushbuttons and the maximum number of pushbuttons in the composite pushbuttons need to be set. If the time interval of pushbuttons and the number of pushbuttons of a pushbutton number exceed the maximum time interval and the maximum number of pushbuttons respectively, the exceedance of the pushbutton number will be included in a next number to be checked.

306: The color ring back tone platform inquires about a voice file corresponding to the related information of the color ring back tone in a color ring back tone database according to the No. of the color ring back tone.

307: The color ring back tone platform ceases playing the color ring back tone to the calling terminal, and plays the voice file of the related information of the color ring back tone to the calling terminal, then the process goes to step 309.

308: For pushbuttons which do not pass the checking, the color ring back tone platform continues playing the color ring back tone to the calling terminal.

309: The color ring back tone platform does not cease playing the voice file of the related information of the color ring back tone or the color ring back tone till the called terminal answers a call or the calling terminal and/or the called terminal hangs up.

The originating switch and the terminating switch in this embodiment may be the same switch; or, a transit switch may be introduced between the originating switch and the terminating switch. In the latter case, the process of sending and receiving the information of color ring back tone is the same as that of this embodiment.

In this embodiment, the calling terminal may, by pressing a preset key/composite keys, receive the related information of the color ring back tone, thereby meeting requirements of users better.

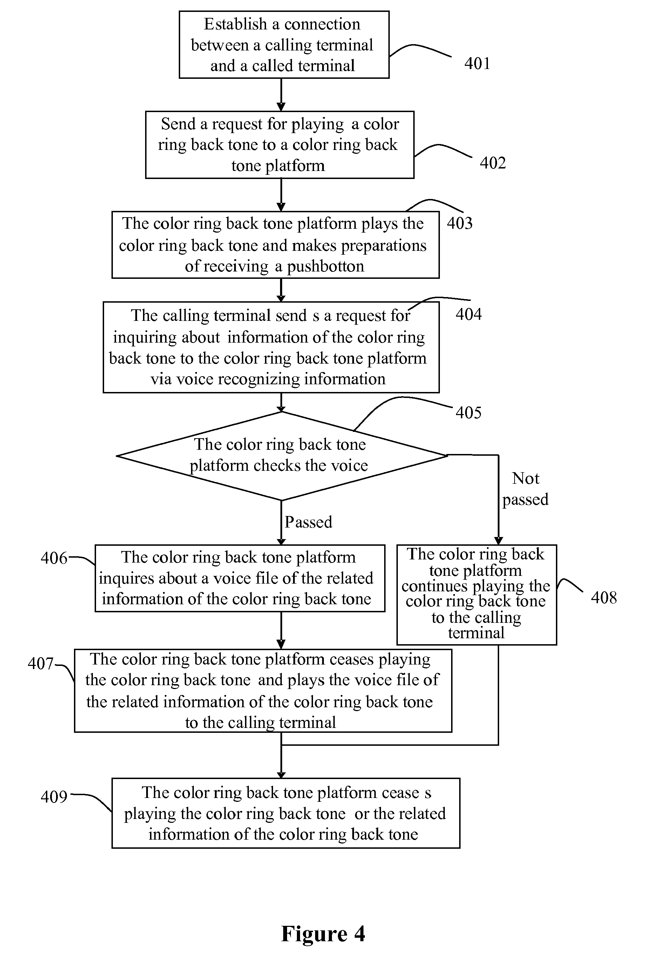

Another embodiment of the present invention provides a method for sending related information of a color ring back tone. Referring to Figure 4, the method includes the following steps:

401: Establish a connection between a calling terminal and a called terminal via an originating switch and a terminating switch in turn.

402: Send a request for playing the color ring back tone to a color ring back tone platform, where the subject of the request may be the originating switch or the terminating switch.

403: The color ring back tone platform plays the color ring back tone to the calling terminal, and makes preparations of receiving voice transmitted from the calling terminal.

404: In the process of the color ring back tone platform playing the color ring back tone to the calling terminal, if the calling terminal is interested in the color ring back tone being played and wants to know the related information of the color ring back tone such as the singer of the color ring back tone, the song name of the color ring back tone and the price of the color ring back tone, the calling terminal may send a request for inquiring about the related information of the color ring back tone to the color ring back tone platform via voice recognizing information, i.e. a voice recognizing device is added in the color ring back tone platform, and if the calling terminal sends a voice request, the voice recognizing device in the color ring back tone platform can recognize the voice.

405: After receiving the request for inquiring about the related information of the color ring back tone, the color ring back tone platform checks the voice made by the calling terminal user. If the color ring back tone platform determines that the voice made by the calling terminal are identical to a preset voice, it indicates that the voice passes the checking and the process goes to step 406; otherwise, the process goes to step 408.

406: The color ring back tone platform inquires about a voice file of the related information of the color ring back tone. If the related information of the color ring back tone is a text file of the related information of the color ring back tone, the color ring back tone platform converts the text file into a voice file of the related information of the color ring back tone via a text-to-speech converter.

407: The color ring back tone platform ceases playing the color ring back tone to the calling terminal, and plays the voice file of the related information of the color ring back tone to the calling terminal, then the process goes to step 409.

408: For the voice which does not pass the checking, the color ring back tone platform continues playing the color ring back tone to the calling terminal.

409: The color ring back tone platform does not cease playing the voice file of the related information of the color ring back tone or the color ring back tone till the called terminal answers a call or the calling terminal and/or the called terminal hangs up.

The originating switch and the terminating switch in this embodiment may be the same switch; or, a transit switch may be introduced between the originating switch and the terminating switch. In the latter case, the process of sending and receiving the related information of color ring back tone is the same as that of this embodiment.

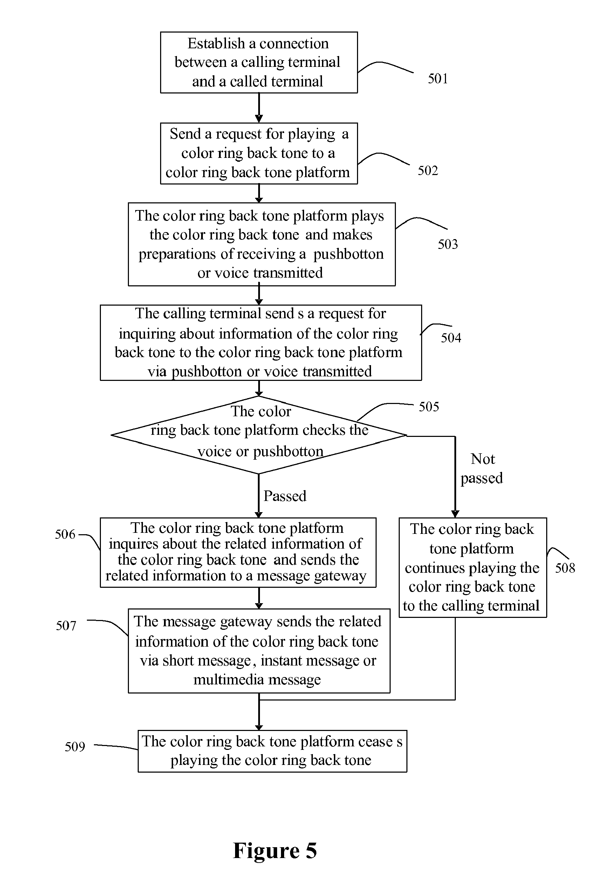

Another embodiment of the present invention provides a method for sending related information of a color ring back tone. Referring to Figure 5, the method includes the following steps:

501: Establish a connection between a calling terminal and a called terminal via an originating switch and a terminating switch in turn.

502: Send a request for playing the color ring back tone to a color ring back tone platform, where the subject of the request may be the originating switch or the terminating switch.

503: The color ring back tone platform plays the color ring back tone to the calling terminal, and makes preparations of receiving a pushbutton or voice transmitted from the calling terminal.

504: In the process of the color ring back tone platform playing the color ring back tone to the calling terminal, if the calling terminal is interested in the color ring back tone being played and wants to know the related information of the color ring back tone such as the singer of the color ring back tone, the song name of the color ring back tone and the price of the color ring back tone, the calling terminal may send a request for inquiring about the related information of the color ring back tone to the color ring back tone platform via pushbutton or voice, i.e. a voice recognizing device is added in the color ring back tone platform, and if the calling terminal sends a voice request, the voice recognizing device in the color ring back tone platform can recognize the voice; in the case of pushbutton, i.e. the calling terminal presses a particular key or composite keys such as the key "*" and the keys "1*", to send the request for inquiring about the related information of the color ring back tone the color ring back tone platform. In this manner, a forward voice channel and a backward voice channel between the calling terminal and the called terminal should be maintained as valid, i.e. the calling terminal in the backward voice channel can listen to the color ring back tone and the color ring back tone platform in the forward voice channel can receive the pushbutton request from the calling terminal.

505: After receiving the request for inquiring about the related information of the color ring back tone, the color ring back tone platform checks the voice or pushbutton transmitted from the calling terminal. If the color ring back tone platform determines that the voice transmitted from the calling terminal is identical to a preset voice, it indicates that the voice passes the checking and the process goes to step 506; otherwise, the process goes to step 508. If the color ring back tone platform determines that the particular pushbutton/composite pushbuttons made by the calling terminal are identical to a preset pushbutton/composite pushbuttons, it indicates that the pushbutton/composite pushbuttons pass the checking and the process goes to step 506; otherwise, the process goes to step 508. For the checking of the composite pushbuttons, a maximum time interval of respective adjacent pushbuttons in the composite pushbuttons and the maximum number of pushbuttons in the composite pushbuttons need to be set. If the time interval of pushbuttons and the number of pushbuttons of a pushbutton number exceed the maximum time interval and the maximum number of pushbuttons respectively, the exceedance of the pushbutton number will be included in a next number to be checked.

506: The color ring back tone platform inquires about the related information of the color ring back tone in a color ring back tone database according to the No. of the color ring back tone, and formats the related information of the color ring back tone as inquired to a character string, sends the character string to a message gateway, and continues playing the color ring back tone to the calling terminal.

507: The message gateway sends the related information of the color ring back tone to the calling terminal via short message, instant message or multimedia message, then the process goes to step 509.

508: For pushbuttons or voice which does not pass the checking, the color ring back tone platform continues playing the color ring back tone to the calling terminal.

509: The color ring back tone platform does not cease playing the color ring back tone till the called terminal answers a call or the calling terminal and/or the called terminal hangs up.

In this embodiment, the calling terminal triggers the message gateway via pushbutton or voice, to transfer the related information of the color ring back tone to the calling terminal via short message, instant message or multimedia message, thereby fulfilling requirements of the related information of the color ring back tone of the terminal user and improving the user's experience.

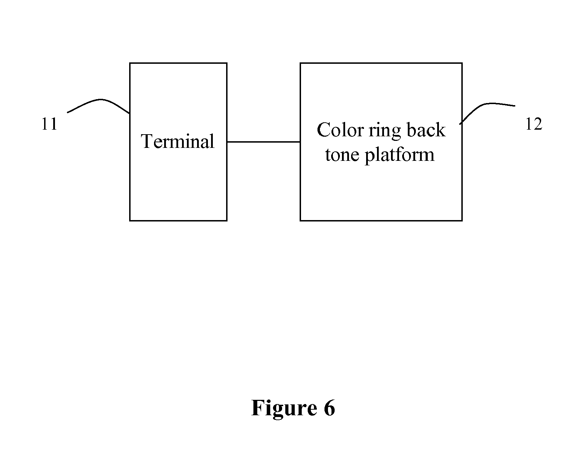

Another embodiment of the present invention provides a system for sending related information of a color ring back tone. Referring to Figure 6, the system includes:

a terminal 11, adapted to send a request for playing the color ring back tone to a color ring back tone platform 12, and to send a request for obtaining the related information of the color ring back tone sent from the color ring back tone platform 12 in the process of playing the color ring back tone; and

the color ring back tone platform 12, adapted to play the color ring back tone and to send the related information of the color ring back tone to the terminal 11.

Further, the terminal 11 is adapted to send the request for obtaining the related information of the color ring back tone sent from the color ring back tone platform 12 in the process of playing the color ring back tone via pushbutton or voice recognizing information.

Further, the color ring back tone platform 12 is adapted to terminate playing the color ring back tone and to play a voice of the related information of the color ring back tone. The voice of the related information of the color ring back tone may be obtained by converting the related information of the color ring back tone in a form of text via a text-to-speech converter, or may be a voice file of the related information of the color ring back tone stored in the color ring back tone platform 12.

Alternatively, the step of sending by the color ring back tone platform 12 the related information of the color ring back tone to the terminal 11 includes: sending the related information of the color ring back tone sent from the color ring back tone platform 12 to the terminal 11 through a message gateway (not illustrated) connected with the color ring back tone platform 12 via short message, instant message or multimedia message.

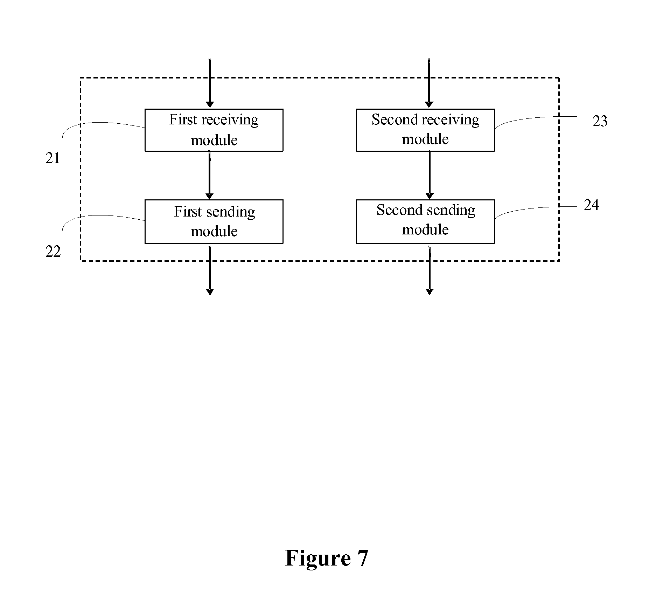

Another embodiment of the present invention provides a device for sending related information of a color ring back tone. Referring to Figure 7, the device includes:

a first receiving module 21, adapted to receive a request for playing the color ring back tone;

a first sending module 22, adapted to play the color ring back tone according to the request for playing the color ring back tone;

a second receiving module 23, adapted to receive a request for obtaining the related information of the color ring back tone in the process of playing the color ring back tone; and

a second sending module 24, adapted to send the related information of the color ring back tone according to the request for obtaining the related information of the color ring back tone.

Further, the second receiving module 23 is adapted to receive the request for obtaining the related information of the color ring back tone, the request being sent via pushbutton or voice recognizing information, in the process of playing the color ring back tone.

Further, the second sending module 24 is adapted to terminate playing the color ring back tone and to play a voice containing the related information of the color ring back tone; or the second sending module 24 is adapted to send the related information of the color ring back tone via short message, instant message or multimedia message according to the request for obtaining the related information of the color ring back tone.

Further, the device for sending related information of a color ring back tone includes a text-to-speech converter (not illustrated), which is adapted to convert the related information of the color ring back tone in a form of text into the voice of the related information of the color ring back tone.

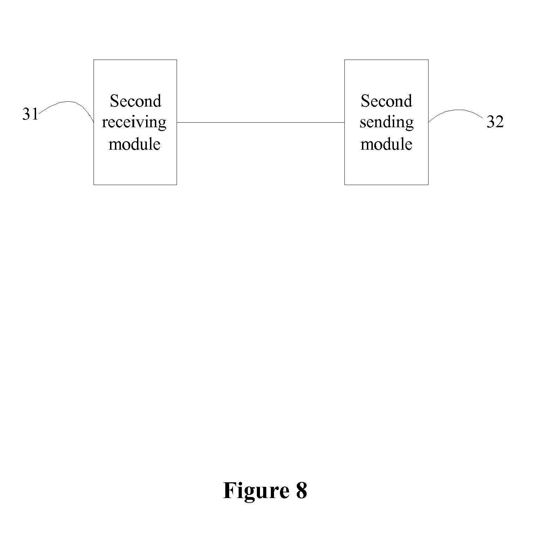

Another embodiment of the present invention provides a device for sending related information of a color ring back tone. Referring to Figure 8, the device includes:

a second receiving module 31, adapted to receive a request for obtaining the related information of the color ring back tone in the process of playing the color ring back tone; and

a second sending module 32, adapted to send the related information of the color ring back tone according to the request for obtaining the related information of the color ring back tone.

The second sending module 32 is further adapted to terminate playing the color ring back tone and to play a voice containing the related information of the color ring back tone.

The device may further include a text-to-speech converter (not illustrated), which is adapted to convert the related information of the color ring back tone in a form of text into the voice of the related information of the color ring back tone.

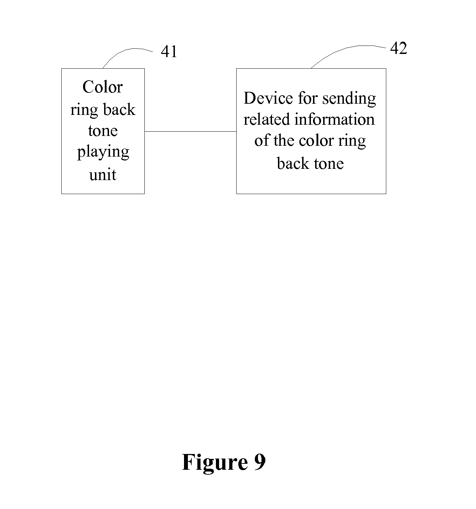

Another embodiment of the present invention provides a system for sending related information of a color ring back tone. Referring to Figure 9, the system includes:

a color ring back tone playing unit 41, adapted to play the color ring back tone according to a request for playing the color ring back tone; and

a device for sending the related information of the color ring back tone 42, adapted to receive a request for obtaining the related information of the color ring back tone in the process of playing the color ring back tone, and to send the related information of the color ring back tone according to the request for obtaining the related information of the color ring back tone.

The device for sending the related information of the color ring back tone 42 may be further adapted to terminate playing the color ring back tone and to play a voice containing the related information of the color ring back tone.

The device for sending the related information of the color ring back tone 42 may be further adapted to send the related information of the color ring back tone to a receiver of the color ring back tone via short message, instant message or multimedia message.

In addition, software implementing the embodiments of the present invention may be stored in a computer-readable storage media. When the software is executed, a process includes the following steps: receiving a request for playing the color ring back tone; playing the color ring back tone; receiving a request for obtaining the related information of the color ring back tone in the process of playing the color ring back tone, the request for obtaining the related information being sent by the receiver of the color ring back tone; and sending the related information of the color ring back tone. The storage media may be Rom/Ram, disk and optical disk, etc.

The above disclosure is merely detailed embodiments of the present invention, which does not limit the present invention. Any variation of the present invention made by those skilled in the art within the above disclosure shall fall into the protective scope of the present invention.

## Claims

1. A method for sending related information of a color ring back tone, comprising:
receiving a request for obtaining the related information of the color ring back tone in the process of playing the color ring back tone, the request for obtaining the related information being sent by the receiver of the color ring back tone; and
sending the related information of the color ring back tone according to the request for obtaining the related information of the color ring back tone.

2. The method for sending related information of a color ring back tone according to claim 1, wherein the request for obtaining the related information of the color ring back tone comprises: a request for obtaining the related information of the color ring back tone sent by the receiver via pushbutton information or voice recognizing information.

3. The method for sending related information of a color ring back tone according to claim 2, wherein the sending the related information of the color ring back tone comprises: terminating playing the color ring back tone and playing a voice containing the related information of the color ring back tone.

4. The method for sending related information of a color ring back tone according to claim 3, wherein the played voice containing the related information of the color ring back tone is obtained by converting the related information of the color ring back tone in a form of text via a text-to-speech converter.

5. The method for sending related information of a color ring back tone according to claim 2, wherein the related information of the color ring back tone is sent in a form of short message, instant message or multimedia message.

6. A system for sending related information of a color ring back tone, comprising:
a color ring back tone playing unit, adapted to play the color ring back tone according to a request for playing the color ring back tone; and
a device for sending the related information of the color ring back tone, adapted to receive a request for obtaining the related information of the color ring back tone in the process of playing the color ring back tone, and to send the related information of the color ring back tone according to the request for obtaining the related information of the color ring back tone.

7. The system for sending related information of a color ring back tone according to claim 6, wherein the device for sending the related information of the color ring back tone is further adapted to terminate playing the color ring back tone and to play a voice containing the related information of the color ring back tone.

8. The system for sending related information of a color ring back tone according to claim 6, wherein the device for sending the related information of the color ring back tone is further adapted to send the related information of the color ring back tone to a receiver of the color ring back tone via short message, instant message or multimedia message.

9. A device for sending related information of a color ring back tone, comprising:
a second receiving module, adapted to receive a request for obtaining the related information of the color ring back tone in the process of playing the color ring back tone; and
a second sending module, adapted to send the related information of the color ring back tone according to the request for obtaining the related information of the color ring back tone.

10. The device for sending related information of a color ring back tone according to claim 9, wherein the second sending module is further adapted to terminate playing the color ring back tone and to play a voice containing the related information of the color ring back tone.

11. The device for sending related information of a color ring back tone according to claim 10, further comprising: a text-to-speech converter, adapted to convert the related information of the color ring back tone in a form of text into the voice of the related information of the color ring back tone.
